# EUROPÄISCHE PATENTSCHRIFT

(11) **EP 3 995 790 B1**
(45) Veröffentlichungstag und Bekanntmachung des Hinweises auf die Patenterteilung: **08.01.2025**
(21) Anmeldenummer: 21205866.3
(22) Anmeldetag: 02.11.2021
(51) Int. Cl.: G01F 1/696, G01F 25/10, G01F 1/58

(54) **DURCHFLUSSMESSGERÄT, VERFAHREN ZUM BETREIBEN EINES DURCHFLUSSMESSGERÄTS, ANLAGE UND VERFAHREN ZUM BETREIBEN EINER ANLAGE**
FLOWMETER, METHOD FOR OPERATING A FLOWMETER, INSTALLATION AND METHOD FOR OPERATING AN INSTALLATION
DÉBITMÈTRE, PROCÉDÉ DE FONCTIONNEMENT D'UN DÉBITMÈTRE, INSTALLATION ET PROCÉDÉ DE FONCTIONNEMENT D'UNE INSTALLATION

(30) Priorität: 04.11.2020 DE 102020129074
(43) Veröffentlichungstag der Anmeldung: 11.05.2022
(73) Patentinhaber: Krohne Messtechnik GmbH, 47058 Duisburg (DE)
(72) Erfinder: Kuschnerus, Dirk, 47802 Krefeld (DE); Walbrecker, Sven, 46485 Wesel (DE); Krawczyk-Becker, Martin, 44653 Herne (DE); Mucke, Hansjörg, 41066 Mönchengladbach (DE)
(74) Vertreter: Gesthuysen Patentanwälte

(56) Entgegenhaltungen:
- EP-A1- 2 801 875
- EP-A1- 3 470 800
- US-A- 5 831 175
- US-A1- 2006 155 496
- US-A1- 2009 071 264
- US-A1- 2020 209 022

## Beschreibung

Die Erfindung geht aus von einem Durchflussmessgerät mit wenigstens einer Steuer- und Auswerteeinheit und mit einer Sensoreinheit zur Erfassung einer Primärgröße, wobei die Steuer- und Auswerteeinheit wenigstens eine Recheneinheit zur Bestimmung des Durchflusses und für den Betrieb der Sensoreinheit aufweist, wobei die Sensoreinheit mit der Recheneinheit verbunden ist und wobei die Recheneinheit derart ausgebildet ist, dass sie im Betrieb aus der Primärgröße den Durchfluss bestimmt und mit wenigstens einem Speicher für die Hinterlegung von einer Mehrzahl von Datensätzen.

Darüber hinaus betrifft die Erfindung ein Verfahren zum Betreiben eines erfindungsgemäßen Durchflussmessgeräts, wobei in dem wenigstens einen Speicher eine Mehrzahl an Datensätzen hinterlegt ist.

Zudem betrifft die Erfindung eine Anlage, insbesondere eine Abfüllanlage zur Abfüllung eines fluiden Mediums, umfassend wenigstens zwei erfindungsgemäße Durchflussmessgeräte, wobei die wenigstens zwei Durchflussmessgeräte im Verlauf eines Rohrsystems angeordnet sind, mit anderen Worten sind die wenigstens zwei Durchflussmessgeräte damit natürlich im Verlauf eines Rohrsystems anordenbar, weiterhin umfassend ein Kommunikationssystem, über das im Betrieb die Steuer- und Auswerteeinheiten der Durchflussmessgeräte miteinander kommunizieren können.

Weiterhin betrifft die Erfindung ein Verfahren zum Betreiben einer erfindungsgemäßen Anlage.

Insbesondere in komplexen Anlagen, wie beispielsweise Anlagen zur Abfüllung eines Mediums herrschen wechselnde Prozessbedingungen insbesondere in Bezug auf die zu messenden Medien. Beispielsweise können wechselnde Prozessbedingungen regelmäßig oder als Teil des Prozesses auftreten.

In der Getränkeabfüllung sind solche Prozesse beispielsweise:
- Füllanlagen, die das Füllmedium wechseln, insbesondere Medien mit unterschiedlichen Feststoffanteilen und/oder Medien mit unterschiedlichen Leitfähigkeiten,
- Füllanlagen, die häufig gereinigt werden müssen, wobei das Reinigungsmittel sich insbesondere in der Temperatur und/oder der Leitfähigkeit von dem abzufüllenden Medium unterscheidet,
- mehrphasige Prozesse, in denen innerhalb eines Füllvorgangs zuerst eine sehr kleine Menge eines Mediums und kurz darauf durch das dasselbe Füllventil eine größere Menge eines anderen Mediums abgefüllt wird, wobei sich die Medien in ihren Eigenschaften, insbesondere in der Viskosität, der Leitfähigkeit und/oder dem Feststoffanteil ändern können,
- Prozesse, in denen das Medium in Vorwärts- und Rückwärtsrichtung durch das Messgerät strömt.

Aus dem Stand der Technik bekannte Durchflussmessgeräte arbeiten basierend auf einer Standardkonfiguration und/oder einer Standardkalibrierung, die im Normalfall auf der Messung von Wasser basiert, unabhängig von der speziellen Prozesssituation beim Kunden. Folglich weist der Messprozess bei Abweichung der Prozessbedingungen von den der Standardkonfiguration und/oder der Standardkalibrierung zugrunde liegenden Prozessbedingungen einen erhöhten Fehler auf.

Aus der Druckschrift EP 2 082 191 B1 ist bekannt, zur Bestimmung und Überwachung einer Prozessgröße mittels eines Feldgeräts partiell rekonfigurierbare Funktionsmodule vorzusehen, denen über eine Kontroll- und Auswerteeinheit applikationsspezifisch Informationen zugeleitet werden.

Die Druckschrift DE 102 60 959 A1 betrifft ein Füllstandmessgerät mit einem Speicher, wobei in dem Speicher für verschiedene Anwendungen Parametersätze abgelegt sind, wobei eine Auswerteeinheit im Betrieb einen Parametersatz auswählt und anhand dieses Parametersatzes aus dem Messsignal den Füllstand ableitet. Dabei enthält ein Parametersatz vorzugsweise Informationen über die Einbauhöhe des Füllstandmessgeräts im Behälter, die Behältergeometrie, mögliche Einbauten oder die Dielektrizitätskonstante des Füllguts.

Aus der Druckschrift DE 103 51 313 A1 ist ein Verfahren zur Nullpunktkorrektur eines Messgeräts bekannt, wobei zunächst bei verschiedenen Geräte-und Systemparametern Nullpunktmessungen durchgeführt und ein Parametersatz umfassend sowohl den Nullmesswert als auch ein Geräte- und Systemparametersatz gespeichert werden und wobei im Betrieb zu den jeweils aktuellen System- und Geräteparametern ein passender gespeicherter Geräte-und/oder Systemparametersatz gesucht wird, sodass der diesem Parametersatz zugeordnete Nullmesswert als aktueller Nullpunktswert verwendet wird.

Die Druckschrift DE 10 2005 018 396 A1 offenbart ein Verfahren zur Bestimmung des Volumen- oder des Massedurchflusses eines Mediums wobei während einer Kalibrierphase in der Rohrleitung bzw. in dem Messrohr sukzessive unterschiedliche Strömungsprofile eines Messmediums ausgebildet werden, wobei jedes in der Rohrleitung bzw. in dem Messrohr ausgebildete Strömungsprofil durch einen charakteristischen Parametersatz beschrieben wird, und wobei zu jedem Strömungsprofil ein strömungsprofilabhängiger Korrekturfaktor errechnet wird, und wobei nachfolgend im Messbetrieb ein über den Parametersatz ermittelter Volumen- bzw. Massedurchfluss mit dem während der Kalibrierphase bestimmten strömungsprofilabhängigen Korrekturfaktor korrigiert wird.

Die Druckschrift DE 10 201 044 182 offenbart ein System zur Einstellung eines Messgeräts mit dem Messgerät, mit einem Analysetool und mit einer Datenbank, in der die Datensätze mit Analysedaten zu unterschiedlichen Prozessbedingungen und die zugehörigen Parametersätze zur Einstellung des Messgeräts abgespeichert sind oder in der eine Vielzahl von Modellen mit zugeordneten Rechenvorschriften gespeichert sind, und mit einer Rechen-/Regeleinheit, die den Datensatz der abgespeicherten Analysedaten ermittelt, der die maximale Übereinstimmung mit den ermittelten Analysedaten aufweist und das Messgerät entsprechend dem zugehörigen Parametersatz einstellt. Die Einstellung des Messgeräts betrifft z.B. Filtereinstellungen mit denen beispielsweise Reflexionen an Störfaktoren oder Rauschsignale ausgeblendet werden.

Das Dokument WO 2015/010072 A1 betrifft ein Verfahren zur Messung eines Prozessmediums mit einem Messgerät, das wenigstens zwei Prozessmediumsmatrizen aufweist, wobei im Betrieb basierend auf den Eigenschaften des Prozessmediums die relevante Prozessmediumsmatrix ausgewählt wird und wobei die Konzentration des Prozessmediums basierend auf der Prozessmediumsmatrix bestimmt wird.

Aus der Druckschrift DE102016115397A1 ist ein Verfahren zum Verarbeiten eines frequenzmodulierten Dauerstrich-Radarsignals (FMCW-Radarsignal), mit den folgenden Schritten bekannt: Abrufen eines Konfigurationsparametersatzes entsprechend einer Arbeitsumgebung oder einem detektierten Material, selektives Ausführen eines Prozesses entsprechend dem Konfigurationsparametersatz und Analysieren des verarbeiteten Signals und Erzeugen eines Detektionsergebnisses.

Zudem betrifft die Druckschrift DE 10 2018 123 434 A1 ein Feldgerät der Automatisierungstechnik, wobei in einer Speichereinheit eine Mehrzahl an Parametersätzen hinterlegt ist, und wobei in Abhängigkeit von einer Umgebungsgröße ein Parametersatz dem Betrieb des Feldgeräts zugrunde gelegt wird. Im Detail betreffen die variablen Parameter Einstellungen des Feldgerätes, insbesondere Einstellungen hinsichtlich Warnmeldungen oder hinsichtlich des zeitlichen Betriebs des Messgeräts oder hinsichtlich der Menüdarstellung der Anzeigeeinheit.

Aus der Druckschrift US 2006/155496 A1 ist ein Durchflussmessgerät mit einem Kompensationsmodul bekannt, wobei das Kompensationsmodul eine Referenzmessung durchführt, um die Auswirkung von Variationen von Prozess- oder Mediumparameter auszugleichen.

Weiterhin betrifft die Druckschrift US 2020/209022 A1 ein Durchflussmessgerät, das zur Bestimmung des Durchflusses einen Differenzdruck im Medium erfasst. In Abhängigkeit von dem gemessenen Differenzdruck wird ein Parametersatz zur Berechnung der Durchflussrate ausgewählt.

Aus der Druckschrift EP 3 470 800 A1 ist ein Durchflussmessgerät bekannt, wobei die Durchflussberechnung ebenfalls aktuelle Prozessparameter berücksichtigt.

EP 2 801 875 A1 offenbart ein Durchflussmessgerät in einer Abfüllanlage, wobei eine Parametrierung an einem veränderten Betriebszustand angepasst wird.

Weitere Durchflussmessgeräte sind aus den Dokumente US 2009071264 A1 und US5831175 A1 bekannt.

Ausgehend von dem dargelegten Stand der Technik liegt der Erfindung die Aufgabe zugrunde, ein Durchflussmessgerät anzugeben, das eine erhöhte Messgenauigkeit aufweist. Zudem ist es Aufgabe der Erfindung ein Verfahren zum Betreiben eines Durchflussmessgeräts anzugeben, das eine erhöhte Messgenauigkeit aufweist. Weiterhin liegt der Erfindung die Aufgabe zugrunde, eine Anlage umfassend wenigstens zwei erfindungsgemäße Durchflussmessgeräte sowie ein Verfahren zum Betreiben einer solchen Anlage mit einer erhöhten Messgenauigkeit anzugeben.

Gemäß einer ersten Lehre der Erfindung wird die zuvor genannte Aufgabe durch ein eingangs beschriebenes Durchflussmessgerät dadurch gelöst, dass die Recheneinheit im Betrieb die Sensoreinheit basierend auf wenigstens einem Datensatz aus der Mehrzahl von Datensätzen ansteuert,
wobei der wenigstens eine Datensatz wenigstens einen Satz Kalibrierwerte und/oder wenigstens einen Parameter für den Betrieb der Sensoreinheit, im Detail für die Ansteuerung der Sensoreinheit umfasst,
wobei der wenigstens eine Datensatz wenigstens einem Wert einer Zustandsgröße zugeordnet ist, wobei die wenigstens eine Zustandsgröße insbesondere ein Mediumparameter und/oder ein Prozessparameter ist,
und wobei die Recheneinheit derart ausgebildet ist, dass sie im Betrieb in Abhängigkeit von einer Änderung der Zustandsgröße den Datensatz austauscht.

Gemäß einer bevorzugten Ausgestaltung bestimmt die Recheneinheit im Betrieb den Durchfluss basierend auf wenigstens einem Datensatz, wobei der wenigstens eine Datensatz zusätzlich wenigstens einen Parameter zur Bestimmung des Durchflusses umfasst.

Gemäß einer Ausgestaltung der Erfindung ist der Speicher in der Steuer- und Auswerteeinheit angeordnet. Alternativ ist der Speicher extern, vorzugsweise in einer externen Steuereinheit, angeordnet.

Besonders bevorzugt ist die Recheneinheit derart ausgestaltet, dass sie im Betrieb zur Bestimmung des Durchflusses und/oder zum Betrieb der Sensoreinheit, insbesondere zur Ansteuerung der Sensoreinheit, in Abhängigkeit von dem Wert wenigstens einer Zustandsgröße den wenigstens einen der Zustandsgröße zugeordneten Datensatz auswählt.

Grundsätzlich ist festzuhalten, dass durch die zuvor genannten Merkmale keine Reihenfolge eines Verfahrens zum Betreiben eines solchen Durchflussmessgerätes festgelegt werden soll. Diesbezüglich wird auf die Ausführungen zu dem entsprechenden Verfahren verwiesen.

Erfindungsgemäß wurde erkannt, dass die Messgenauigkeit eines Durchflussmessgeräts dadurch erhöht werden kann, dass das Durchflussmessgerät derart ausgebildet ist, dass im Betrieb die zur Berechnung des Durchflusses relevanten Parameter und/oder die Parameter zum Betrieb der Sensoreinheit , insbesondere die Parameter zur Ansteuerung der Sensoreinheit, an die jeweils aktuellen Betriebsbedingungen angepasst werden kann. Auf diese Weise kann der Betrieb des Durchflussmessgeräts an die jeweilige Messsituation angepasst, und insofern der Fehler der Durchflussmessung minimiert und die Messgenauigkeit daher erhöht werden.

Im Unterschied zum Stand der Technik der DE 10 2018 123 434 A1 geht es in der vorliegenden Erfindung somit nicht darum, Einstellungen des Messgerätes zur Optimierung des vom eigentlichen Messvorgang unabhängigen Betrieb des Messgeräts anzupassen, sondern es geht vielmehr darum, genau die Parameter anzupassen, die dem Messvorgang und/oder der Auswertung der gemessenen Daten zugrunde liegen.

Das erfindungsgemäße Durchflussmessgerät ist besonders bevorzugt ein Magnetisch-induktives Durchflussmessgerät (MID). Gemäß einer weiteren ebenfalls bevorzugten Ausgestaltung ist das Durchflussmessgerät ein Coriolis-Durchflussmessgerät oder ein Ultraschalldurchflussmessgerät oder ein Vortex-Durchflussmessgerät.

Ist das Durchflussmessgerät ein MID, so ist der wenigstens eine Parameter für den Betrieb der Sensoreinheit die Feldfrequenz des Magnetfeldes und/oder ein Parameter zur Ansteuerung des Magnetfeldes und/oder die Nullpunkteinstellung und/oder die Verstärkung für geringe Fließgeschwindigkeiten und/oder die Messbereichseinstellung und/oder die Feldstromstärke und/oder eine Konstante für die Durchflussrichtung.

Für die weiteren genannten Durchflussmessgeräte sind die den Betrieb bzw. die Ansteuerung der Sensoreinheit betreffenden Parameter entsprechend dem dem Messgerät zugrunde liegenden Prinzip ausgebildet.

Besonders bevorzugt weist ein Datensatz wenigstens zwei Parameter für den Betrieb, insbesondere zur Ansteuerung, der Sensoreinheit und/oder zur Bestimmung des Durchflusses auf. Diese Ausgestaltung weist den Vorteil auf, dass die für eine Zustandsgrößen angepasste Parametrierung des Durchflussmessgeräts besonders einfach durch Auswahl eines Datensatzes erfolgen kann.

Gemäß einer Ausgestaltung ist jeder Datensatz mit einem Wertebereich einer Zustandsgröße verknüpft.

Gemäß einer nächsten Ausgestaltung unterscheiden sich die in der Mehrzahl der Datensätze hinterlegten Parameter in ihrer Art.

Ist das Durchflussmessgerät beispielsweise als MID ausgebildet, so umfasst wenigstens ein Datensatz Parameter hinsichtlich der Feldfrequenz des Magnetfeldes und ein anderer Datensatz umfasst eine Konstante für die Durchflussrichtung. Insofern können voneinander unabhängige Parameter im Betrieb gesondert eingestellt werden. Dabei sind vorzugsweise Datensätze, die in ihrer Art unterschiedliche Parameter aufweisen, verschiedenen Zustandsgrößen zugeordnet.

Gemäß dieser Ausgestaltung ist die Recheneinheit vorzugsweise derart ausgebildet, dass sie im Betrieb zur Bestimmung des Durchflusses und/oder zum Betrieb der Sensoreinheit einzelne Parameter aus einer Mehrzahl an Datensätzen auswählt.

Gemäß einer besonders bevorzugten Ausgestaltung ist wenigstens ein weiterer Sensor zur Messung der Zustandsgröße, insbesondere zur Messung wenigstens eines Prozessparameters und/oder eines Mediumparameters, vorhanden, wobei der wenigstens eine weitere Sensor vorzugsweise mit der Recheneinheit verbunden ist. Im Betrieb leitet der wenigstens eine weitere Sensor den gemessenen Wert der Zustandsgröße vorzugsweise an die Recheneinheit weiter, die dann in Abhängigkeit der gemessenen Zustandsgröße wenigstens einen Datensatz zur Bestimmung des Durchflusses und/oder zum Betrieb der Sensoreinheit auswählt.

Gemäß einer besonders bevorzugten Ausgestaltung weist die Recheneinheit eine Sensorschnittstelle zu dem wenigstens einen weiteren Sensor zur Messung der Zustandsgröße, insbesondere zur Messung eines Prozessparameters und/oder eines Mediumparameters auf, wobei der wenigstens eine weitere Sensor Teil des Durchflussmessgeräts sein kann oder wobei der wenigstens eine weitere Sensor separat von dem Durchflussmessgerät angeordnet sein kann oder wobei der wenigstens eine weitere Sensor Teil eines weiteren Messgerätssein kann.

Beispielsweise kann der wenigstens eine weitere Sensor auch in einer externen Steuereinheit angeordnet sein.

Besonders bevorzugt ist der wenigstens eine weitere Sensor oder das weitere Messgerät über eine Kabelverbindung oder eine drahtlose Verbindung, insbesondere über eine Funkverbindung, mit der Recheneinheit verbunden.

Besonders bevorzugt ist der wenigstens eine weitere Sensor ein Leitfähigkeitssensor und/oder ein Temperatursensor und/oder ein Drucksensor und/oder ein Beschleunigungssensor und/oder ein Sensor zur Messung der Dichte des Mediums und/oder ein Sensor zur Messung der Zusammensetzung des Mediums und/oder ein Sensor zur Messung der Fließrichtung des Mediums.

Gemäß einer nächsten Ausgestaltung weist die Steuer- und Auswerteeinheit eine, vorzugsweise digitale, Geräteschnittstelle auf, wobei vorzugsweise die Steuer- und Auswerteeinheit über die Geräteschnittstelle mit der externen Steuereinheit verbunden ist. Ebenfalls bevorzugt ist die Geräteschnittstelle mit der Recheneinheit und/oder dem wenigstens einen weiteren Sensor verbunden. Über eine solche Schnittstelle kann die Zustandsgröße und/oder der wenigstens eine der Messung zugrunde zu legende Datensatz, beispielsweise manuell, vorgegeben werden oder eine Messung der Zustandsgröße durch den weiteren Sensor kann angefragt werden. Weiterhin kann die Recheneinheit über die Geräteschnittstelle mit einer weiteren, vorzugsweise übergeordneten, Steuereinheit oder mit einem weiteren Durchflussmessgerät verbunden sein, sodass die Recheneinheit die Zustandsgröße und/oder den der Messung zugrunde zu legenden Datensatz von einem anderen Gerät über die Geräteschnittstelle erhält.

Gemäß einer Ausgestaltung entspricht die Sensorschnittstelle der Geräteschnittstelle.

Die Zustandsgröße kann auch einen zeitlichen Prozessabschnitt definieren. Beispielsweise kann die Zustandsgröße ein Befehl zum Schließen von Ventilen in einer Abfüllanlage sein. Erhält die Recheneinheit des Durchflussmessgerätes diesen Befehl über die Geräteschnittstelle, insbesondere durch Mitlesen der Kommunikation, wählt die Recheneinheit den wenigstens einen diesem Befehl zugeordneten Datensatz zum Betrieb der Sensoreinheit und/oder zur Bestimmung des Durchflusses aus.

Gemäß einer zweiten Lehre der vorliegenden Erfindung wird die eingangs dargelegte Aufgabe durch ein eingangs genanntes Verfahren zum Betreiben eines Durchflussmessgeräts dadurch gelöst, dass das Verfahren die folgenden Schritte umfasst:
- Auswahl wenigstens eines der Messung zugrunde zu legenden Datensatzes vorzugsweise durch Messung einer Zustandsgröße,
- Betrieb der Sensoreinheit entsprechend dem wenigstens einen ausgewählten Datensatz,
- Erfassung einer Primärgröße durch die Sensoreinheit und Weiterleitung der Primärgröße an die Recheneinheit,
- Bestimmung des Durchflusses durch die Recheneinheit aus der Primärgröße und vorzugsweise dem wenigstens einen ausgewählten Datensatz.

Hierzu ist das Durchflussmessgerät vorzugsweise gemäß einer der zuvor beschriebenen Ausgestaltungen ausgebildet. Der erste Schritt der Auswahl von wenigstens einem Datensatz muss nicht vor jeder Messung neu ausgeführt werden. Gemäß einer Ausgestaltung des Verfahrens wird wenigstens ein Datensatz zum Betrieb der Sensoreinheit und/oder zur Bestimmung des Durchflusses ausgewählt und dieser wenigstens eine Datensatz wird auch den nachfolgenden Messungen zugrunde gelegt. Beispielsweise kann die Zustandsgröße in regelmäßigen Abständen bestimmt werden und/oder der wenigstens eine ausgewählte Datensatz wird der Messung so lange zugrunde gelegt, bis die Recheneinheit die Mitteilung erhält, dass ein neuer Prozessabschnitt beginnt, mit dem der Datensatz neu ausgewählt wird.

Erfindungsgemäß wird insofern der der Messung zugrunde zu legende Datensatz in Abhängigkeit von dem Datensatz zugeordneten Wert der Zustandsgröße ausgetauscht.

Gemäß einer Ausgestaltung wird die wenigstens eine Zustandsgröße vor jeder Messung neu bestimmt.

Die wenigstens eine Zustandsgröße ist vorzugsweise ein Prozessparameter, insbesondere die Geschwindigkeit des Mediums und/oder die Temperatur des Mediums oder die Temperatur innerhalb des Messrohrs und/oder der Druck des Mediums oder der Druck innerhalb des Messrohrs. Zudem kann die Zustandsgröße auch ein Mediumparameter, insbesondere die Dichte des Mediums und/oder die Leitfähigkeit des Mediums und/oder die Zusammensetzung des Mediums.

Die Zustandsgröße kann aber auch einen zeitlichen Prozessabschnitt definieren. Beispielsweise kann die Zustandsgröße ein Befehl zum Betätigen eines Ventils und/oder die Information über die Position oder die Lage des Durchflussmessgeräts sein.

Gemäß einer weiteren Ausgestaltung erhält die Recheneinheit den Wert der Zustandsgröße über eine Geräteschnittstelle durch Mitlesen der Kommunikation zwischen anderen Geräten und/oder explizit von einem anderen Gerät und/oder manuell durch den Nutzer. Gemäß einer weiteren Ausgestaltung wird der Steuer- und Auswerteeinheit der der Messung zugrunde zu legende Datensatz von einer externen Steuereinheit über die Geräteschnittstelle mitgeteilt.

Gemäß einer nächsten Ausgestaltung bestimmt der wenigstens eine weitere Sensor die wenigstens eine Zustandsgröße.

Gemäß einer dritten Lehre der vorliegenden Erfindung ist die eingangs genannte Aufgabe durch eine eingangs beschriebene Anlage dadurch gelöst, dass die Durchflussmessgeräte derart ausgebildet und miteinander verknüpft sind, dass sie im Betrieb in Abhängigkeit von dem Wert von wenigstens einer Zustandsgröße einen identischen Datensatz oder identische Datensätze zur Bestimmung des Durchflusses und/oder zum Betrieb der jeweiligen Sensoreinheit, insbesondere zur Ansteuerung der jeweiligen Sensoreinheit, verwenden.

Diese Ausgestaltung weist den Vorteil auf, dass einerseits der Betrieb der Durchflussmessgeräte an die aktuelle Messsituation angepasst werden kann und des Weiteren gewährleistet werden kann, dass sämtliche Durchflussmessgeräte basierend auf einem identischen Datensatz oder identischen Datensätzen arbeiten.

Besonders bevorzugt sind dazu in den wenigstens zwei Steuer- und Auswerteeinheiten der Durchflussmessgeräte zumindest teilweise identische Datensätze hinterlegt.

Alternativ kann wenigstens ein externer Speicher vorhanden sein, der den Durchflussmessgeräten zugeordnet ist. Beispielsweise kann der wenigstens eine externe Speicher in einer zentralen Steuereinheit angeordnet sein.

Besonders bevorzugt ist eine zentrale Steuereinheit vorhanden, die mit den wenigstens zwei erfindungsgemäß ausgebildeten Durchflussmessgeräten über das Kommunikationssystem verbunden ist und die im Betrieb den Steuer- und Auswerteeinheiten die Zustandsgröße mitteilt, sodass die Durchflussmessgeräte in Abhängigkeit von der übermittelten Zustandsgröße den wenigstens einen korrespondieren Datensatz auswählen.

Gemäß einer nächsten Ausgestaltung ist die zentrale Steuereinheit vorhanden, die mit den wenigstens zwei Durchflussmessgeräten über das Kommunikationssystem verbunden ist, wobei die zentrale Steuereinheit im Betrieb den Steuer- und Auswerteeinheiten den wenigstens einen der Messung zugrunde zu legenden Datensatz mitteilt. Beispielsweise kann die zentrale Steuereinheit hierzu einen weiteren Sensor zur Bestimmung der Zustandsgröße aufweisen.

Die Anlage ist gemäß einer Ausgestaltung eine Abfüllanlage zur kontrollierten Abfüllung eines Mediums in wenigstens einen Behälter. Besonders bevorzugt sind die Durchflussmessgeräte jeweils im Bereich einer Abfüllstelle angeordnet. Durch die angepasste Parametrierung der Durchflussmessgeräte an die aktuelle Messsituation kann der Fehler in der Durchflussmessung minimiert und damit die Genauigkeit des Abfüllprozesses erhöht werden.

Gemäß einer weiteren Ausgestaltung kann die Anlage auch eine Batchanlage oder auch eine andere Anlage, in der ein Wechsel von Prozessbedingungen oder wechselnde Zusammensetzungen der Medien regelmäßig oder als Teil des Prozesses auftreten, sein.

Gemäß einer vierten Lehre der vorliegenden Erfindung wird die eingangs dargelegte Aufgabe durch ein eingangs beschriebenes Verfahren zum Betreiben einer Anlage dadurch gelöst, dass die erfindungsgemäß ausgebildeten Durchflussmessgeräte im Betrieb einen identischen Datensatz oder identische Datensätze zum Betrieb der Sensoreinheit und/oder zur Bestimmung des Durchflusses verwenden.

Gemäß einer besonders bevorzugten Ausgestaltung des Verfahrens ist die zentrale Steuereinheit vorhanden, die mit den wenigstens zwei erfindungsgemäß ausgebildeten Durchflussmessgeräten über das Kommunikationssystem verbunden ist, wobei die zentrale Steuereinheit im Betrieb den Steuer- und Auswerteeinheiten die Zustandsgröße mitteilt, sodass die Durchflussmessgeräte in Abhängigkeit von der übermittelten Zustandsgröße den korrespondierenden Datensatz auswählen oder wobei die zentrale Steuereinheit im Betrieb den Steuer- und Auswerteeinheiten den der Messung zugrunde zu legenden Datensatz mitteilt.

Besonders bevorzugt ist es ebenfalls, wenn genau ein Durchflussmessgerät derart ausgestaltet ist, dass es im Betrieb den Datensatz auswählt und den übrigen Durchflussmessgeräten über das Kommunikationssystem mitteilt.

Sind die Durchflussmessgeräte in Fließrichtung des Mediums hintereinander angeordnet, so kann das eine Durchflussmessgerät, das den relevanten Datensatz bestimmt, das in Fließrichtung erste Durchflussmessgerät sein.

Es gibt nun eine Vielzahl von Möglichkeiten, das erfindungsgemäße Durchflussmessgerät, das erfindungsgemäße Verfahren und die erfindungsgemäße Abfüllanlage ausgestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein erstes Ausführungsbeispiel eines erfindungsgemäßen Durchflussmessgeräts,
- Fig. 2: ein zweites Ausführungsbeispiel eines erfindungsgemäßen Durchflussmessgeräts,
- Fig. 3: ein drittes Ausführungsbeispiel eines erfindungsgemäßen Durchflussmessgeräts,
- Fig. 4: in Ausführungsbeispiel eines erfindungsgemäßen Verfahrens zum Betreiben eines Durchflussmessgeräts,
- Fig. 5: in weiteres Ausführungsbeispiel eines erfindungsgemäßen Verfahrens zum Betreiben eines Durchflussmessgeräts,
- Fig. 6: ein Ausführungsbeispiel einer erfindungsgemäßen Anlage
- Fig. 7: ein zweites Ausführungsbeispiel einer erfindungsgemäßen Anlage,
- Fig. 8: ein drittes Ausführungsbeispiel einer erfindungsgemäßen Anlage,
- Fig. 9: ein Ausführungsbeispiel eines Verfahrens zur Betreiben einer erfindungsgemäßen Anlage und
- Fig. 10: ein zweites Ausführungsbeispiel eines Verfahrens zum Betreiben einer erfindungsgemäßen Anlage.

Die nachfolgend beschriebenen Ausführungsbeispiele betreffen ein Magnetisch-induktives Durchflussmessgerät. Selbstverständlich ist dies keine Einschränkung der Erfindung auf dieses Messprinzip. Die Erfindung lässt sich ebenso vorteilhaft mit anderen Durchflussmessgeräten realisieren.

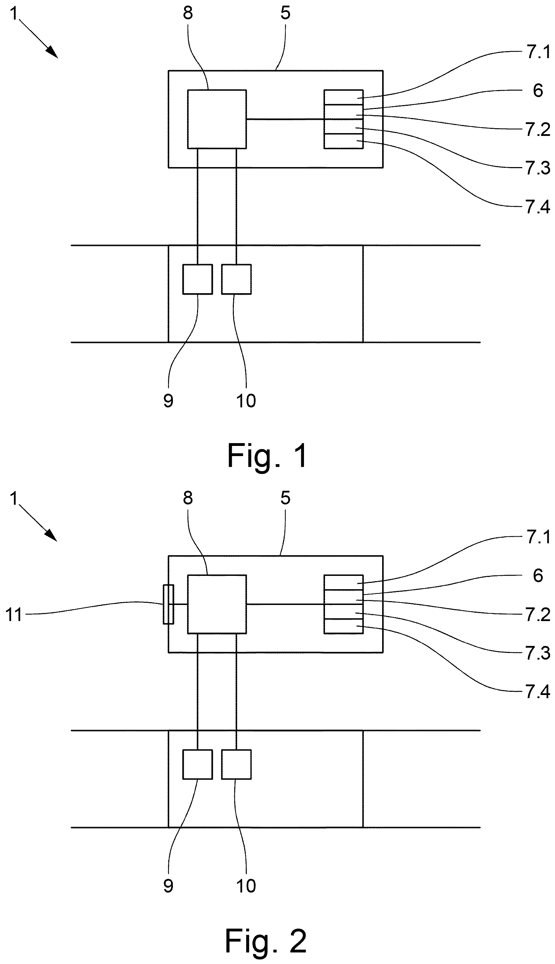

Fig. 1 zeigt ein erstes Ausführungsbeispiel eines erfindungsgemäßen Durchflussmessgerätes 1 mit einer Steuer- und Auswerteeinheit 5, wobei die Steuer- und Auswerteeinheit 5 einen Speicher 6 für die Hinterlegung von einer Mehrzahl von Datensätzen 7.1, 7.2, 7.3 und 7.4 und eine Recheneinheit 8 aufweist. Im dargestellten Ausführungsbeispiel ist das Durchflussmessgerät 1 als MID ausgebildet. Die in dem Speicher 6 hinterlegten Datensätze 7.1, 7.2, 7.3 und 7.4 betreffen vorliegend die Feldfrequenz und die Parameter zur Ansteuerung des Magnetfeldes Overshoot und Settling time. Vorliegend umfasst der Datensatz 7.1 die Feldfrequenz A, Overshoot A und Settling Time A für die Vorwärtsfüllung und der Datensatz 7.2 die Feldfrequenz B, Overshoot B und Settling Time B für die Rückwärtsfüllung.

Darüber hinaus ist eine Sensoreinheit 9 zur Erfassung einer Primärgröße, hier der Spannung zwischen den Messelektroden, vorhanden, wobei die Sensoreinheit 9 mit der Recheneinheit 8 verbunden ist, und wobei die Recheneinheit 8 im Betrieb aus der Primärgröße den Durchfluss bestimmt.

Zudem ist die Recheneinheit 8 mit dem Speicher 6 derart verknüpft, dass die Recheneinheit 8 zur Bestimmung des Durchflusses und/oder zum Betrieb der Sensoreinheit 9 auf einen Datensatz 7.1, 7.2, 7.3, 7.4 zugreift. Dabei ist jeder Datensatz 7.1, 7.2, 7.3, 7.4 mit wenigstens einer Zustandsgröße verknüpft. Im dargestellten Ausführungsbeispiel ist der Datensatz 7.1 mit einer Vorwärtsmessung verknüpft und Datensatz 7.2 mit einer Rückwärtsmessung.

Zur Bestimmung der Zustandsgröße ist ein weiterer Sensor 10 vorhanden. In Abhängigkeit von der jeweiligen Zustandsgröße wählt die Recheneinheit 8 den der Zustandsgröße zugeordneten Datensatz zur Bestimmung des Durchflusses bzw. zum Betrieb der Sensoreinheit aus.

Insofern weist das dargestellte Durchflussmessgerät 1 den Vorteil auf, dass die jeweilige Messsituation bzw. auch Änderungen der Messsituation bei dem Betrieb der Sensoreinheit 9 sowie bei der Bestimmung des Durchflusses berücksichtigt werden, sodass im Ergebnis die Genauigkeit der Durchflussbestimmung verbessert werden kann.

Das in Fig. 2 dargestellte Durchflussmessgerät 1 weist als weiteren Sensor 10 zur Bestimmung der Zustandsgröße einen Leitfähigkeitssensor auf. Im Betrieb leitet der Leitfähigkeitssensor den gemessenen Wert der Leitfähigkeit an die Recheneinheit 8 weiter. In Abhängigkeit der gemessenen Leitfähigkeit wählt die Recheneinheit 8 einen Datensatz 7.1, 7.2, 7.3 und 7.4, der nachfolgenden Messung zugrunde gelegt wird.

Darüber hinaus ist eine Schnittstelle 11 vorhanden, über die die Recheneinheit 8 auch externe Befehle hinsichtlich einer weiteren Zustandsgröße oder auch den Wert einer weiteren Zustandsgröße von einem separat angeordneten Sensor erhalten kann.

Insofern ist das dargestellte Durchflussmessgerät 1 dazu ausgestaltet, dass bei Änderung der Messsituation auch der der Messung zugrunde liegende Datensatz geändert werden kann.

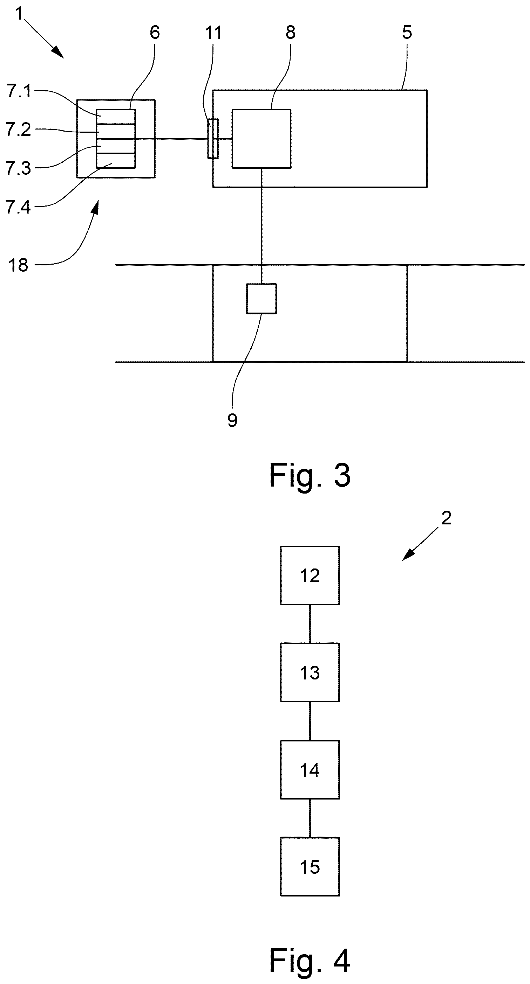

Im Unterschied zu dem in Fig. 2 dargestellten Ausführungsbeispiel ist in dem in Fig. 3 dargestellten Ausführungsbeispiel eines Durchflussmessgeräts 1 der Speicher 6 mit der Mehrzahl an Datensätzen 7.1, 7.2, 7.3, 7.4 in einer externen Steuereinheit 18 angeordnet. Im Betrieb erhält die Steuer- und Auswerteinheit 5 den wenigstens einen Datensatz 7.1, 7.2, 7.3, 7.4 zur Bestimmung des Durchflusses und/oder dem Betrieb der Sensoreinheit 9, insbesondere der Ansteuerung der Sensoreinheit 9 von der externen Steuereinheit 18 über die Geräteschnittstelle 11.

In Fig. 4 ist ein erstes Ausführungsbeispiel eines Verfahrens 2 zum Betreiben eines Durchflussmessgerätes 1 dargestellt, wobei das Durchflussmessgerät 1 gemäß dem in Fig. 1 gezeigten Ausführungsbeispiel ausgebildet ist.

Das Verfahren weist die folgenden Schritte auf:
- Auswahl 12 eines der Messung zugrunde zu legenden Datensatzes 7.1, 7.2, 7.3, 7.4 durch Messung einer Zustandsgröße mittels des zusätzlichen Sensors 10,
- Betrieb 13 der Sensoreinheit 9 entsprechend dem ausgewählten Datensatz 7.1, 7.2, 7.3, 7.4,
- Erfassung 14 einer Primärgröße durch die Sensoreinheit 9 und Weiterleitung der Primärgröße an die Recheneinheit 8,
- Bestimmung 15 des Durchflusses durch die Recheneinheit 8 aus der Primärgröße und dem ausgewählten Datensatz 7.1, 7.2, 7.3, 7.4.

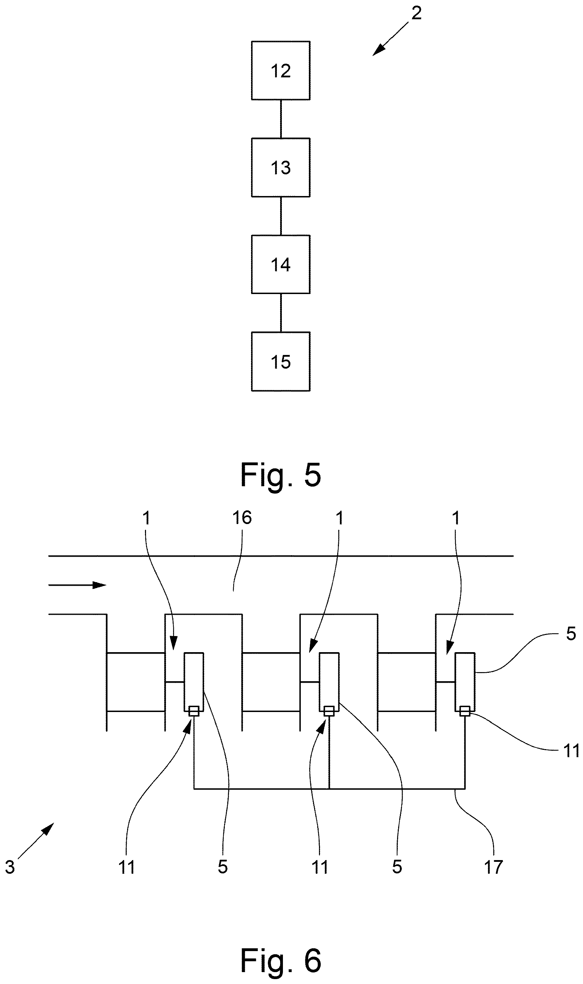

Fig. 5 zeigt ein weiteres Ausführungsbeispiel eines Verfahrens 2 zum Betreiben eines Durchflussmessgerätes 1, wobei das Durchflussmessgerät 1 gemäß dem in Fig. 2 dargestellten Ausführungsbeispiel ausgebildet ist.

Das Verfahren 2 weist die folgenden Schritte auf:
- Auswahl 12 eines der Messung zugrunde zu legenden Datensatzes 7.1, 7.2, 7.3, 7.4, wobei der Recheneinheit 8 über die Geräteschnittstelle 11 eine Information über den aktuellen Prozessabschnitt erhält und basierend auf dieser Information den Datensatz 7.1, 7.2, 7.3, 7.4 auswählt,
- Betrieb 13 der Sensoreinheit 9 entsprechend dem ausgewählten Datensatz 7.1, 7.2, 7.3, 7.4,
- Erfassung 14 einer Primärgröße durch die Sensoreinheit 9 und Weiterleitung an die Recheneinheit 8,
- Bestimmung 15 des Durchflusses durch die Recheneinheit 8 aus der Primärgröße und dem ausgewählten Datensatz 7.1, 7.2, 7.3, 7.4.

Fig. 6 zeigt ein erstes Ausführungsbeispiel einer erfindungsgemäßen Anlage 3, die im dargestellten Ausführungsbeispiel als Abfüllanlage ausgebildet ist. An einem Rohrsystem 16 sind drei Durchflussmessgeräte 1 jeweils im Bereich einer Abfüllstelle angeordnet.

Die Durchflussmessgeräte 1 sind derart aufeinander abgestimmt, dass in den drei Steuer- und Auswerteeinheiten 5 identische Datensätze 7.1, 7.2, 7.3, 7.4 hinterlegt sind. Zudem ist ein Kommunikationssystem 17 in Form eines Kommunikationsbusses vorhanden, über das im Betrieb die Steuer- und Auswerteeinheiten 5 der Durchflussmessgeräte 1 miteinander kommunizieren.

Im dargestellten Ausführungsbeispiel bestimmt das in Fließrichtung, die mittels eines Pfeils angedeutet ist, zuerst angeordnete Durchflussmessgerät den der nachfolgenden Messung zugrunde zu legenden Datensatz zum Betrieb der jeweiligen Sensoreinheit 9 sowie zur Bestimmung des Durchflusses und teilt den übrigen Durchflussmessgeräten 1 den ausgewählten Datensatz 7.1, 7.2, 7.3, 7.4 über das Kommunikationsystem 17 mit.

Dadurch ist sichergestellt, dass die dargestellte Abfüllanlage im Betrieb an sämtlichen Abfüllstellen die gleichen Parameter zur Steuerung der Durchflussmessgeräte sowie zur Berechnung des Durchflusses nutzt.

Im Ergebnis weist die dargestellte Anlage damit eine besonders hohe Messgenauigkeit auf.

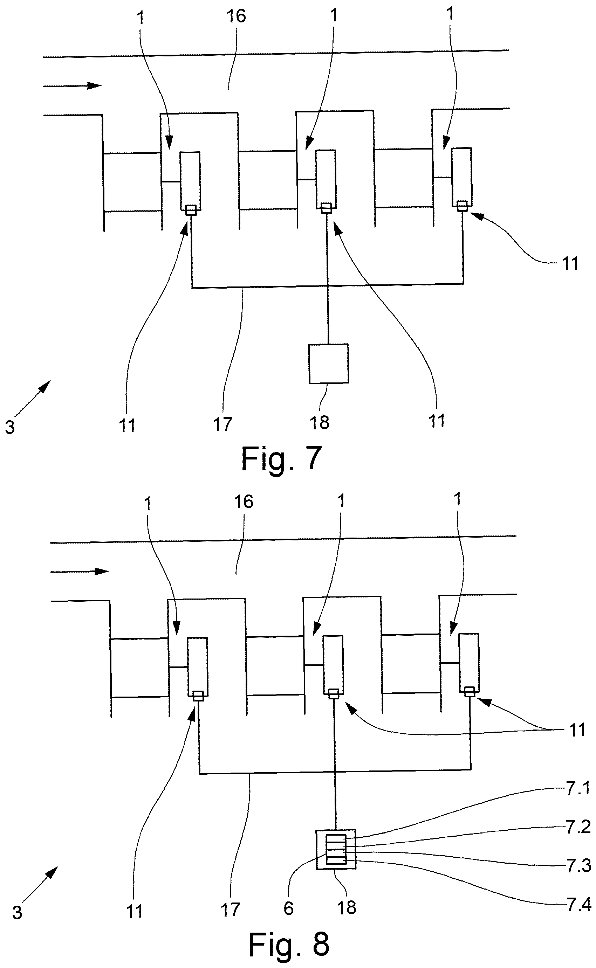

Fig. 7 zeigt ein zweites Ausführungsbeispiel einer Abfüllanlage 3 mit drei erfindungsgemäß ausgebildeten Durchflussmessgeräten 1, die über ein Kommunikationssystem 17 miteinander verbunden sind, wobei jedes Durchflussmessgerät 1 im Bereich einer Abfüllstelle angeordnet ist. Zudem ist eine zentrale Steuereinheit 18 vorhanden, die den Durchflussmessgeräten 1 die Zustandsgröße zur Auswahl des der Messung zugrunde zu legenden Datensatzes 7.1, 7.2, 7.3, 7.4 mitteilt.

Fig. 8 zeigt ein weiteres Ausführungsbeispiel einer Abfüllanlage 3, wobei im Unterschied zu dem in Fig. 7 dargestellten Ausführungsbeispiel die zentrale Steuereinheit 18 nicht nur derart ausgebildet ist, dass sie im Betrieb den einzelnen Durchflussmessgeräten eine Zustandsgröße mitteilt. Vielmehr sind in der zentralen Steuereinheit 18 bereits die Mehrzahl an auszuwählenden Datensätzen 7.1, 7.2, 7.3, 7.4 hinterlegt, sodass die zentrale Steuereinheit 18 im Betrieb den Durchflussmessgeräten 1 einen identischen Datensatz 7.1, 7.2, 7.3, 7.4 zur Bestimmung des Durchflusses und/oder zum Betrieb der Sensoreinheit 9 übermittelt.

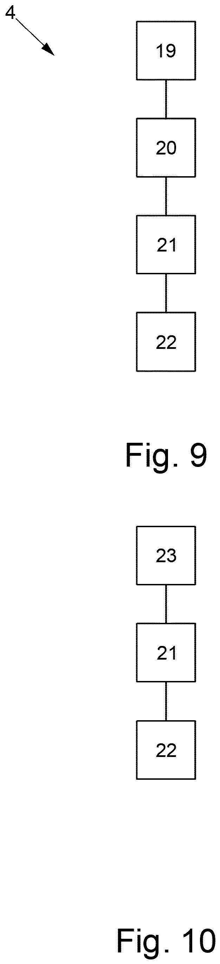

In Fig. 9 ist ein Ausführungsbeispiel eines Verfahrens 4 zum Betreiben einer Anlage 3 umfassend mehrere Durchflussmessgeräte 1, dargestellt, wobei die Anlage 3 gemäß dem in Fig. 5 dargestellten Ausführungsbeispiel ausgebildet ist.

In einem ersten Schritt 19 bestimmt das in Fließrichtung zuerst angeordnete Durchflussmessgerät 1 den zur Durchflussmessung und zum Betrieb der Sensoreinheit 9 relevanten Datensatz 7.1, 7.2, 7.3, 7.4. In einem nächsten Schritt 20 teilt dieses erste Durchflussmessgerät 1 den übrigen Durchflussmessgeräten 1 den ausgewählten Datensatz 7.1, 7.2, 7.3, 7.4 mit. Anschließend werden die Durchflussmessgeräte 1 entsprechend dem ausgewählten Datensatz 7.1, 7.2, 7.3, 7.4 betrieben 21. In einem nächsten Schritt 22 wird der Durchfluss durch die unterschiedlichen Durchflussmessgeräte 1 basierend auf dem ausgewählten identischen Datensatz 7.1, 7.2, 7.3, 7.4 bestimmt.

Zudem zeigt Fig. 10 ein zweites Ausführungsbeispiel eines Verfahrens 4 zum Betreiben einer Anlage 3, wobei die Anlage 3 gemäß dem in Fig. 6 dargestellten Ausführungsbeispiel ausgebildet ist.

In einem ersten Schritt 23 teilt hier die zentrale Steuereinheit 18 den einzelnen Durchflussmessgeräten 1 über den Kommunikationskanal 17 die Zustandsgröße zur Auswahl des der nachfolgenden Messung zugrunde zu legenden Datensatzes mit. Anschließend werden die Durchflussmessgeräte 1 entsprechend dem ausgewählten Datensatz 7.1, 7.2, 7.3, 7.4 betrieben 21. In einem nächsten Schritt 22 wird der Durchfluss durch die unterschiedlichen Druchflussmessgeräte 1 basierend auf dem gleichen Datensatz 7.1, 7.2, 7.3, 7.4 bestimmt.

Im Ergebnis weist das dargestellte Verfahren durch die verbesserte Durchflussmessung ebenfalls einer erhöhten Genauigkeit der Abfüllung eines Mediums auf.

### Bezugszeichen

- 1: Durchflussmessgerät
- 2: Verfahren zum Betreiben eines Durchflussmessgeräts
- 3: Anlage
- 4: Verfahren zum Betreiben einer Anlage
- 5: Steuer- und Auswerteeinheit
- 6: Speicher
- 7.1...7.4: Datensatz
- 8: Recheneinheit
- 9: Sensoreinheit
- 10: weiterer Sensor
- 11: Geräteschnittstelle
- 12: Bestimmung eines Datensatzes
- 13: Steuerung der Sensoreinheit
- 14: Erfassung und Weiterleitung einer Primärgröße
- 15: Bestimmung des Durchflusses
- 16: Rohrsystem
- 17: Kommunikationssystem
- 18: zentrale Steuereinheit
- 19: Auswahl eines Datensatzes
- 20: Mitteilung des ausgewählten Datensatzes
- 21: Betrieb der Durchflussmessgeräte durch den denselben Datensatz
- 22: Bestimmung des Durchflusses
- 23: Mitteilung der Zustandsgröße

## Patentansprüche

1. Durchflussmessgerät (1) mit wenigstens einer Steuer- und Auswerteeinheit (5) und mit einer Sensoreinheit zur Erfassung einer Primärgröße, wobei die Steuer- und Auswerteeinheit (5) wenigstens eine Recheneinheit (8) zur Bestimmung des Durchflusses und für den Betrieb der Sensoreinheit (9) aufweist, wobei die Sensoreinheit (9) mit der Recheneinheit (8) verbunden ist und wobei die Recheneinheit (8) derart ausgebildet ist, dass sie im Betrieb aus der Primärgröße den Durchfluss bestimmt,
mit wenigstens einem dem Durchflussmessgerät zugeordneten Speicher (6) für die Hinterlegung von einer Mehrzahl von Datensätzen (7.1, 7.2, 7.3, 7.4),
**dadurch gekennzeichnet,**
**dass** die Recheneinheit (8) im Betrieb die Sensoreinheit (9) basierend auf wenigstens einem Datensatz (7.1, 7.2, 7.3, 7.4) aus der Mehrzahl von Datensätzen ansteuert,
wobei der wenigstens eine Datensatz (7.1, 7.2, 7.3, 7.4) wenigstens einen Satz Kalibrierwerte und/oder wenigstens einen Parameter für den Betrieb der Sensoreinheit (9), im Detail für die Ansteuerung der Sensoreinheit (9) umfasst,
und wobei der wenigstens eine Datensatz (7.1, 7.2, 7.3, 7.4) wenigstens einem Wert einer Zustandsgröße zugeordnet ist, wobei die wenigstens eine Zustandsgröße ein Mediumparameter und/oder ein Prozessparameter ist.
und wobei die Recheneinheit derart ausgebildet ist, dass sie im Betrieb in Abhängigkeit von einer Änderung der Zustandsgröße den Datensatz (7.1, 7.2, 7.3, 7.4) austauscht.

2. Durchflussmessgerät (1) nach Anspruch 1, **dadurch gekennzeichnet, dass** die Recheneinheit (8) im Betrieb den Durchfluss basierend auf wenigstens einen Datensatz (7.1, 7.2, 7.3, 7.4) bestimmt und dass der wenigstens eine Datensatz (7.1, 7.2, 7.3, 7.4) zusätzlich wenigstens einen Parameter zu Bestimmung des Durchflusses umfasst.

3. Durchflussmessgerät (1) nach Anspruch 1 oder 2, **dadurch gekennzeichnet, dass** die Recheneinheit (8) eine Schnittstelle zu wenigstens einem weiteren Sensor (10) zur Messung der Zustandsgröße, insbesondere zur Messung eines Prozessparameters und/oder eines Mediumparameters aufweist,
wobei der wenigstens eine weitere Sensor (10) über eine Kabelverbindung oder eine drahtlose Verbindung, insbesondere über eine Funkverbindung, mit der Recheneinheit verbunden ist.

4. Durchflussmessgerät (1) nach Anspruch 3, **dadurch gekennzeichnet, dass** der wenigstens eine weitere Sensor Teil des Durchflussmessgeräts ist.

5. Durchflussmessgerät (1) nach Anspruch 3 oder 4, **dadurch gekennzeichnet, dass** der wenigstens eine weitere Sensor (10) ein Leitfähigkeitssensor und/oder ein Temperatursensor und/oder ein Drucksensor und/oder ein Beschleunigungssensor und/oder ein Sensor zur Messung der Dichte des Mediums und/oder ein Sensor zur Messung Zusammensetzung des Mediums und/oder ein Sensor zur Messung der Fließrichtung des Mediums ist.

6. Durchflussmessgerät (1) nach einem der Ansprüche 3 bis 5, **dadurch gekennzeichnet, dass** die Steuer- und Auswerteeinheit (5) eine, vorzugsweise digitale, Geräteschnittstelle (11) aufweist, wobei die Steuer- und Auswerteeinheit über die Geräteschnittstelle (11) mit der externen Steuereinheit verbunden ist.

7. Verfahren (2) zum Betreiben eines Durchflussmessgeräts (1) nach einem der Ansprüche 1 bis 6, wobei in dem wenigstens einen Speicher eine Mehrzahl an Datensätzen (7.1, 7.2, 7.3, 7.4) hinterlegt ist,
**dadurch gekennzeichnet,**
**dass** das Verfahren (2) die folgenden Schritte aufweist,
- Auswahl (12) wenigstens eines der Messung zugrunde zu legenden Datensatzes (7.1, 7.2, 7.3, 7.4) vorzugsweise durch Messung einer Zustandsgröße,
- Betrieb (13) der Sensoreinheit (9) entsprechend dem wenigstens einen ausgewählten Datensatz (7.1, 7.2, 7.3, 7.4),
- Erfassung (14) einer Primärgröße durch die Sensoreinheit (9) und Weiterleitung an die Recheneinheit (8),
- Bestimmung (15) des Durchflusses durch die Recheneinheit (8) aus der Primärgröße und vorzugsweise dem wenigstens einen ausgewählten Datensatz (7.1, 7.2, 7.3, 7.4).

8. Verfahren (2) nach Anspruch 7, **dadurch gekennzeichnet, dass** die wenigstens eine Zustandsgröße ein Mediumparameter und/oder ein Prozessparameter ist.

9. Verfahren (2) nach Anspruch 8, **dadurch gekennzeichnet, dass** der wenigstens eine Prozessparameter die Geschwindigkeit des Mediums und/oder die Temperatur des Mediums und/oder der Druck des Mediums ist.

10. Verfahren (2) nach Anspruch 8 oder 9, **dadurch gekennzeichnet, dass** der wenigstens eine Mediumparameter die Dichte des Mediums und/oder die Leitfähigkeit des Mediums und/oder die Zusammensetzung des Mediums ist.

11. Verfahren (2) nach einem der Ansprüche 7 bis 10, **dadurch gekennzeichnet, dass** eine Geräteschnittstelle (11) vorhanden ist und dass die Bestimmung des der Messung zugrunde zu legenden Datensatzes (7.1, 7.2, 7.3, 7.4) durch einen Befehl über die Geräteschnittstelle erfolgt oder dass der Steuer- und Auswerteeinheit der der Messung zugrunde zu legende Datensatz (7.1, 7.2, 7.3, 7.4) von einer externen Steuereinheit über die Geräteschnittstelle (11) mitgeteilt wird.

12. Anlage (3), insbesondere Abfüllanlage zur Abfüllung eines fluiden Mediums, umfassend wenigstens zwei Durchflussmessgeräte (1) gemäß einem der Ansprüche 1 bis 6, wobei die wenigstens zwei Durchflussmessgeräte (1) im Verlauf eines Rohrsystems anordenbar sind, weiterhin umfassend ein Kommunikationssystem (17), über das im Betrieb die Steuer- und Auswerteeinheiten (5) der Durchflussmessgeräte (1) miteinander kommunizieren können,
**dadurch gekennzeichnet,**
**dass** die Durchflussmessgeräte (1) derart ausgebildet und miteinander verknüpft sind, dass sie im Betrieb in Abhängigkeit von wenigstens einer Zustandsgröße einen identischen Datensatz (7.1, 7.2, 7.3, 7.4) oder identische Datensätze (7.1, 7.2, 7.3, 7.4) zur Bestimmung des Durchflusses und/oder zum Betrieb der jeweiligen Sensoreinheit (9), insbesondere zur Ansteuerung der jeweiligen Sensoreinheit (9), verwenden.

13. Anlage (3) nach Anspruch 12, **dadurch gekennzeichnet, dass** in den wenigstens zwei Steuer- und Auswerteeinheiten (5) der Durchflussmessgeräte (1) zumindest teilweise identische Datensätze (7.1, 7.2, 7.3, 7.4) hinterlegt sind.

14. Anlage (3) nach Anspruch 12 oder 13, **dadurch gekennzeichnet, dass** die Anlage eine zentrale Steuereinheit umfasst, die mit den wenigstens zwei Durchflussmessgeräten über das Kommunikationssystem (17) verbunden ist und die derart ausgebildet ist, dass sie im Betrieb den Steuer- und Auswerteeinheiten (5) die Zustandsgröße mitteilt, wobei die Durchflussmessgeräte (1) derart ausgebildet sind, dass sie in Abhängigkeit von der übermittelten Zustandsgröße den wenigstens einen korrespondierenden Datensatz (7.1, 7.2, 7.3, 7.4) auswählen.

15. Anlage (3) nach Anspruch 14, **dadurch gekennzeichnet, dass** die zentrale Steuereinheit (18) vorhanden ist, die mit den wenigstens zwei Durchflussmessgeräten (1) über das Kommunikationssystem (17) verbunden ist, wobei die zentrale Steuereinheit (18) derart ausgebildet ist, dass sie im Betrieb den Steuer- und Auswerteeinheiten den wenigstens einen der Messung zugrunde zu legenden Datensatz (7.1, 7.2, 7.3, 7.4) mitteilt.

16. Verfahren (4) zum Betreiben einer Anlage (3) gemäß einem der Ansprüche 12 bis 14, **dadurch gekennzeichnet, dass** die wenigstens zwei Durchflussmessgeräte (1) jeweils gemäß einem Verfahren (2) nach einem der Ansprüche 7 bis 10 betrieben werden, wobei die wenigstens zwei Durchflussmessgeräte (1) einen identischen Datensatz (7.1, 7.2, 7.3, 7.4) oder identische Datensätze (7.1, 7.2, 7.3, 7.4) zum Betrieb der Sensoreinheit (9) und/oder zur Bestimmung des Durchflusses verwenden.

17. Verfahren (4) nach Anspruch 16, wobei die zentrale Steuereinheit (18) vorhanden ist, **dadurch gekennzeichnet, dass** die mit den wenigstens zwei Durchflussmessgeräten (1) über das Kommunikationssystem (17) verbunden ist, wobei die zentrale Steuereinheit (18) im Betrieb den Steuer- und Auswerteeinheiten (5) die Zustandsgröße mitteilt, sodass die Durchflussmessgeräte (1) in Abhängigkeit von der übermittelten Zustandsgröße den korrespondierenden Datensatz (7.1, 7.2, 7.3, 7.4) auswählen oder wobei die zentrale Steuereinheit (18) im Betrieb den Steuer- und Auswerteeinheiten (5) den der Messung zugrunde zu legenden Datensatz (7.1, 7.2, 7.3, 7.4) mitteilt.

18. Verfahren (4) nach Anspruch 16, **dadurch gekennzeichnet, dass** genau ein Durchflussmessgerät (1) im Betrieb den Datensatz (7.1, 7.2, 7.3, 7.4) auswählt und den übrigen Durchflussmessgeräten (1) den ausgewählten Datensatz (7.1, 7.2, 7.3, 7.4) über das Kommunikationssystem (17) mitteilt.

## Claims

1. Flowmeter (1) having at least one control and evaluation unit (5) and having a sensor unit for capturing a primary variable, wherein the control and evaluation unit (5) has at least one computing unit (8) for determining the flow rate and/or for operating the sensor unit (9), wherein the sensor unit (9) is connected to the computing unit (8), and wherein the computing unit (8) is designed in such a way that, during operation, it determines the flow rate from the primary variable
having at least one memory (6) associated with the flowmeter for storing a plurality of data sets (7.1, 7.2, 7.3, 7.4)
**characterized in**
**that**, during operation, the computing unit (8) controls the sensor unit (9) based on at least one data set (7.1, 7.2, 7.3, 7.4) of a plurality of data sets,
wherein the at least one data set (7.1, 7.2, 7.3, 7.4) comprises at least one set of calibration values and/or at least one parameter for the operation of the sensor unit (9), in detail for the control of the sensor unit (9),
and wherein the at least one data set (7.1, 7.2, 7.3, 7.4) is assigned to at least one value of a state variable, wherein the at least one state variable is a medium parameter and/or a process parameter,
and wherein the computing unit is designed in such a way that it exchanges the data set (7.1, 7.2, 7.3, 7.4) during operation depending on a change in the state variable.

2. Flowmeter (1) according to claim 1, **characterized in that** the computing unit (8) determines the flow rate during operation based on at least one data set (7.1, 7.2, 7.3, 7.4) and that the at least one data set (7.1, 7.2, 7.3, 7.4) additionally comprises at least one parameter for determining the flow rate.

3. Flowmeter (1) according to claim 1 or 2, **characterized in that** the computing unit (8) has an interface to at least one further sensor (10) for measuring the state variable, in particular for measuring a process parameter and/or a medium parameter,
wherein the at least one further sensor (10) is connected to the computing unit via a cable connection or a wireless connection, in particular via a radio connection.

4. Flowmeter (1) according to claim 3, **characterized in that** the at least one further sensor is part of the flowmeter.

5. Flowmeter (1) according to claim 3 or 4, **characterized in that** the at least one further sensor (10) is a conductivity sensor and/or a temperature sensor and/or a pressure sensor and/or an acceleration sensor and/or a sensor for measuring the density of the medium and/or a sensor for measuring the composition of the medium and/or a sensor for measuring the flow direction of the medium.

6. Flowmeter (1) according to any one of claims 3 to 5, **characterized in that** the control and evaluation unit (5) has a, preferably digital, device interface (11), wherein the control and evaluation unit is connected to the external control unit via the device interface (11).

7. Method (2) for operating a flowmeter (1) according to one of claims 1 to 6, wherein a plurality of data sets (7.1, 7.2, 7.3, 7.4) is stored in the at least one memory,
**characterized in**
**that** the method (2) comprises the following steps,
- selection (12) of at least one data set (7.1, 7.2, 7.3, 7.4) on which the measurement is to be based, preferably by measuring a state variable,
- operation (13) of the sensor unit (9) according to the at least one selected data set (7.1, 7.2, 7.3, 7.4),
- capture (14) of a primary variable by the sensor unit (9) and forwarding it to the computing unit (8),
- determination (15) of the flow rate by the computing unit (8) from the primary variable and preferably the at least one selected data set (7.1, 7.2, 7.3, 7.4).

8. Method (2) according to claim 7, **characterized in that** the at least one state variable is a medium parameter and/or a process parameter.

9. Method (2) according to claim 8, **characterized in that** the at least one process parameter is the velocity of the medium and/or the temperature of the medium and/or the pressure of the medium.

10. Method (2) according to claim 8 or 9, **characterized in that** the at least one medium parameter is the density of the medium and/or the conductivity of the medium and/or the composition of the medium.

11. Method (2) according to any one of claims 7 to 10, **characterized in that** a device interface (11) is provided and that the determination of the data set (7.1, 7.2, 7.3, 7.4) on which the measurement is to be based is carried out by a command via the device interface or that the control and evaluation unit is informed of the data set (7.1, 7.2, 7.3, 7.4) on which the measurement is to be based by an external control unit via the device interface (11).

12. System (3), in particular filling system for filling a fluid medium, comprising at least two flowmeters (1) according to any one of the claims 1 to 6, wherein the at least two flowmeters (1) are arranged in the course of a pipe system, further comprising a communication system (17) via which the control and evaluation units (5) of the flowmeters (1) can communicate with one another during operation,
**characterized in**
**that** the flowmeters (1) are designed and linked to one another in such a way that, during operation, they use an identical data set (7.1, 7.2, 7.3, 7.4) or identical data sets (7.1, 7.2, 7.3, 7.4) depending on at least one state variable for determining the flow rate and/or for operating the respective sensor unit (9), in particular for controlling the respective sensor unit (9).

13. System (3) according to claim 12, **characterized in that** at least partially identical data sets (7.1, 7.2, 7.3, 7.4) are stored in the at least two control and evaluation units (5) of the flowmeters (1).

14. System (3) according to claim 12 or 13, **characterized in that** the system comprises a central control unit which is connected to the at least two flowmeters via the communication system (17) and which is designed such that, during operation, it communicates the status variable to the control and evaluation units (5), wherein the flowmeters (1) are designed such that they select the at least one corresponding data set (7.1, 7.2, 7.3, 7.4) in dependence on the transmitted status variable.

15. System (3) according to claim 14, **characterized in that** the central control unit (18) is provided which is connected to the at least two flowmeters (1) via the communication system (17), wherein the central control unit (18) is designed such that it communicates the at least one data set (7.1, 7.2, 7.3, 7.4) on which the measurement is to be based to the control and evaluation units during operation.

16. Method (4) for operating a system (3) according to any one of claims 12 to 14, **characterized in that** the at least two flowmeters (1) are each operated according to a method (2) according to any one of claims 7 to 10, wherein the at least two flowmeters (1) use an identical data set (7.1, 7.2, 7.3, 7.4) or identical data sets (7.1, 7.2, 7.3, 7.4) for operating the sensor unit (9) and/or for determining the flow rate.

17. Method (4) according to claim 16, **characterized in that** the central control unit (18) is provided which is connected to the at least two flowmeters (1) via the communication system (17), wherein the central control unit (18) communicates the state variable to the control and evaluation units (5) during operation so that the flowmeters (1) select the corresponding data set (7. 1, 7.2, 7.3, 7.4) depending on the communicated state variable or wherein the central control unit (18) communicates the data set (7.1, 7.2, 7.3, 7.4) on which the measurement is to be based to the control and evaluation unit (5) during operation.

18. Method (4) according to claim 16, **characterized in that** exactly one flowmeter (1) selects the data set (7.1, 7.2, 7.3, 7.4) during operation and communicates the selected data set (7.1, 7.2, 7.3, 7.4) to the remaining flowmeters (1) via the communication system (17).

## Revendications

1. Débitmètre (1) comprenant
au moins une unité de commande et d'évaluation (5) et une unité de détection destinée à détecter une grandeur primaire, l'unité de commande et d'évaluation (5) comportant au moins une unité de calcul (8) destinée à déterminer le débit et à faire fonctionner l'unité de détection (9), l'unité de détection (9) étant reliée à l'unité de calcul (8) et l'unité de calcul (8) étant conçue de manière à déterminer pendant le fonctionnement le débit à partir de la grandeur primaire,
au moins une mémoire (6) associée au débitmètre et destinée à stocker une pluralité d'ensembles de données (7.1, 7.2, 7.3, 7.4),
**caractérisé en ce que**
l'unité de calcul (8) commande l'unité de détection (9) pendant le fonctionnement sur la base d'au moins un ensemble de données (7.1, 7.2, 7.3, 7.4) parmi la pluralité d'ensembles de données,
l'au moins un ensemble de données (7.1, 7.2, 7.3, 7.4) comprenant au moins un ensemble de valeurs d'étalonnage et/ou au moins un paramètre destiné au fonctionnement de l'unité de détection (9), en particulier à la commande de l'unité de détection (9),
et
l'au moins un ensemble de données (7.1, 7.2, 7.3, 7.4) étant associé à au moins une valeur d'une grandeur d'état,
l'au moins une grandeur d'état étant un paramètre de milieu et/ou un paramètre de processus.
et
l'unité de calcul étant conçue de manière à échanger l'ensemble de données (7.1, 7.2, 7.3, 7.4) pendant le fonctionnement en fonction d'une variation de la grandeur d'état.

2. Débitmètre (1) selon la revendication 1, **caractérisé en ce que** l'unité de calcul (8) détermine le débit pendant le fonctionnement sur la base d'au moins un ensemble de données (7.1, 7.2, 7.3, 7.4) et **en ce que** l'au moins un ensemble de données (7.1, 7.2, 7.3, 7.4) comprend en outre au moins un paramètre destiné à déterminer le débit.

3. Débitmètre (1) selon la revendication 1 ou 2, **caractérisé en ce que** l'unité de calcul (8) comporte une interface avec au moins un autre capteur (10) destiné à mesurer la grandeur d'état, en particulier à mesurer un paramètre de processus et/ou un paramètre de milieu,
l'au moins un autre capteur (10) étant relié à l'unité de calcul par une liaison par câble ou une liaison sans fil, en particulier par une liaison radio.

4. Débitmètre (1) selon la revendication 3, **caractérisé en ce que** l'au moins un autre capteur fait partie du débitmètre.

5. Débitmètre (1) selon la revendication 3 ou 4, **caractérisé en ce que** l'au moins un autre capteur (10) est un capteur de conductivité et/ou un capteur de température et/ou un capteur de pression et/ou un capteur d'accélération et /ou un capteur destiné à mesurer la densité du milieu et/ou un capteur destiné à mesurer la composition du milieu et/ou un capteur destiné à mesurer le sens d'écoulement du milieu.

6. Débitmètre (1) selon l'une des revendications 3 à 5, **caractérisé en ce que** l'unité de commande et d'évaluation (5) comporte une interface de débitmètre (11), de préférence numérique, l'unité de commande et d'évaluation étant reliée à l'unité de commande extérieure par le biais de l'interface de débitmètre (11).

7. Procédé (2) de fonctionnement d'un débitmètre (1) selon l'une des revendications 1 à 6, une pluralité d'ensembles de données (7.1, 7.2, 7.3, 7.4) étant stockée dans l'au moins une mémoire,
**caractérisé en ce que**
le procédé (2) comporte les étapes suivantes :
- sélectionner (12) au moins un ensemble de données (7.1, 7.2, 7.3, 7.4) utilisé comme base pour la mesure, de préférence par mesure d'une grandeur d'état,
- faire fonctionner (13) l'unité de détection (9) en fonction de l'au moins un ensemble de données sélectionné (7.1, 7.2, 7.3, 7.4),
- détecter (14) une grandeur primaire par le biais de l'unité de détection (9) et transmettre celle-ci à l'unité de calcul (8),
- déterminer (15) le début à travers l'unité de calcul (8) à partir de la grandeur primaire et de préférence de l'au moins un ensemble de données sélectionné (7.1, 7.2, 7.3, 7.4).

8. Procédé (2) selon la revendication 7, **caractérisé en ce que** l'au moins une grandeur d'état est un paramètre de milieu et/ou un paramètre de processus.

9. Procédé (2) selon la revendication 8, **caractérisé en ce que** l'au moins un paramètre de processus est la vitesse du milieu et/ou la température du milieu et/ou la pression du milieu.

10. Procédé (2) selon la revendication 8 ou 9, **caractérisé en ce que** l'au moins un paramètre de milieu est la densité du milieu et/ou la conductivité du milieu et/ou la composition du milieu.

11. Procédé (2) selon l'une des revendications 7 à 10, **caractérisé en ce qu'**une interface de débitmètre (11) est présente et **en ce que** la détermination de l'ensemble de données (7.1, 7.2, 7.3, 7.4) utilisé comme base pour la mesure est déterminée par une instruction par le biais de l'interface de débitmètre ou **en ce que** l'ensemble de données (7.1, 7.2, 7.3, 7.4) utilisé comme base pour la mesure est communiqué à l'unité de commande et d'évaluation par une unité de commande extérieure par le biais de l'interface de débitmètre (11).

12. Installation (3), notamment installation de remplissage destinée à remplir un milieu fluide, ladite installation comprenant au moins deux débitmètres (1) selon l'une des revendications 1 à 6, les au moins deux débitmètres (1) pouvant être disposés le long d'un système de canalisations, ladite installation comprenant en outre un système de communication (17) permettant aux unités de commande et d'évaluation (5) des débitmètres (1) de communiquer les unes avec les autres pendant le fonctionnement,
**caractérisée en ce que**
les débitmètres (1) sont conçus et reliés entre eux de manière à utiliser pendant le fonctionnement, en fonction d'au moins une grandeur d'état, un ensemble de données identique (7.1, 7.2, 7.3, 7.4) ou des ensembles de données identiques (7.1, 7.2, 7.3, 7.4) pour déterminer le débit et/ou faire fonctionner l'unité de détection respective (9), en particulier pour commander l'unité de détection respective (9).

13. Installation (3) selon la revendication 12, **caractérisée en ce que** des ensembles de données au moins partiellement identiques (7.1, 7.2, 7.3, 7.4) sont stockés dans les au moins deux unités de commande et d'évaluation (5) des débitmètres (1).

14. Installation (3) selon la revendication 12 ou 13, **caractérisée en ce que** l'installation comprend une unité de commande centrale qui est reliée aux au moins deux débitmètres par le biais du système de communication (17) et qui est conçue de manière à communiquer la grandeur d'état pendant le fonctionnement aux unités de commande d'évaluation (5), les débitmètres (1) étant conçus de manière à sélectionner en fonction de la grandeur d'état transmise l'au moins un ensemble de données correspondant (7.1, 7.2, 7.3, 7.4).

15. Installation (3) selon la revendication 14, **caractérisé en ce que** l'unité de commande centrale (18) est présente, laquelle est reliée aux au moins deux débitmètres (1) par le biais du système de communication (17), l'unité de commande centrale (18) étant conçue de manière à communiquer pendant le fonctionnement aux unités de commande et d'évaluation l'au moins un ensemble de données (7.1, 7.2, 7.3, 7.4) utilisé comme base pour la mesure.

16. Procédé (4) de fonctionnement d'un système (3) selon l'une des revendications 12 à 14, **caractérisé en ce que** les au moins deux débitmètres (1) fonctionnent chacun selon un procédé (2) selon l'une des revendications 7 à 10, les au moins deux débitmètres (1) utilisant un ensemble de données identique (7.1, 7.2, 7.3, 7.4) ou des ensembles de données identiques (7.1, 7.2, 7.3, 7.4) pour faire fonctionner l'unité de détection (9) et/ou pour déterminer le débit.

17. Procédé (4) selon la revendication 16, l'unité de commande centrale (18) étant présente, **caractérisé en ce qu'**elle est reliée aux au moins deux débitmètres (1) par le biais du système de communication (17), l'unité de commande centrale (18) communiquant pendant le fonctionnement la grandeur d'état aux unités de commande et d'évaluation (5) de sorte que les débitmètres (1) sélectionnent en fonction de la grandeur d'état transmise l'ensemble de données correspondant (7.1, 7.2, 7.3, 7.4) ou l'unité de commande centrale (18) communiquant pendant le fonctionnement aux unités de commande et d'évaluation (5) l'ensemble de données (7.1, 7.2, 7.3, 7.4) utilisé comme base pour la mesure.

18. Procédé (4) selon la revendication 16, **caractérisé en ce qu'**exactement un débitmètre (1) sélectionne l'ensemble de données (7.1, 7.2, 7.3, 7.4) pendant le fonctionnement et communique aux autres débitmètres (1) l'ensemble de données sélectionné (7.1, 7.2, 7.3, 7.4) par le biais du système de communication (17).
